# EUROPÄISCHE PATENTANMELDUNG

(11) **EP 0 835 017 A2**
(43) Veröffentlichungstag der Anmeldung: **08.04.1998**
(21) Anmeldenummer: 97202669.4
(22) Anmeldetag: 08.09.1997
(51) Int. Cl.: H04M 3/54, H04M 1/00

(54) **Telekommunikationssystem mit Rufumleitung**

(30) Priorität: 17.09.1996 DE 19637859
(71) Anmelder: Philips Patentverwaltung GmbH, 22335 Hamburg (DE); Philips Electronics N.V., 5621 BA Eindhoven (NL)
(72) Erfinder: Gössmann, Klemens, Dipl.-Ing., Röntgenstrasse 24, 22335 Hamburg (DE)
(74) Vertreter: Volmer, Georg, Dipl.-Ing.

(57) **Zusammenfassung**

Die Erfindung bezieht sich auf ein Telekommunikationssystem mit mindestens einer Vermittlungsstelle (1), mehreren Teilnehmerendgeräten (2, 3) und einer Rufumleitungsaktivierungsvorrichtung (7, 8-11) zur automatischen Aktivierung einer Rufumleitung von einem ersten Teilnehmerendgerät (2) zu einem zweiten Teilnehmerendgerät (3) zu vorgebbaren Zeitpunkten.

Um eine zuverlässige Aktivierung und Deaktivierung einer Rufumleitung auch für Teilnehmer sicherzustellen, die eine Rufumleitung in Zeiträumen wünschen, die deren Ende variabel ist, wird vorgeschlagen, daß das erste Teilnehmerendgerät (2) eine Signalisierungsvorrichtung (13) zur Signalisierung einer aktivierten Rufumleitung zum zweiten Teilnehmerendgerät (3) und eine manuell betätigbare Rufumleitungsdeaktivierungsvorrichtung (7, 8-11) aufweist.

## Beschreibung

Die Erfindung bezieht sich auf ein Telekommunikationssystem mit mindestens einer Vermittlungsstelle, mehreren Teilnehmerendgeräten und einer Rufumleitungsaktivierungsvorrichtung zur automatischen Aktivierung einer Rufumleitung von einem ersten Teilnehmerendgerät zu einem zweiten Teilnehmerendgerät zu vorgebbaren Zeitpunkten.

Die automatische Rufumleitung ist bei Telefonanlagen allgemein bekannt. Zur Rufumleitung wählt ein Teilnehmer zunächst einen eine Rufumleitungsaktivierung identifizierenden Aktivierungscode und anschließend die Rufnummer des Teilnehmerendgeräts, an das Anrufe weitergeleitet werden sollen. Eine Deaktivierung einer Rufumleitung erfolgt durch das Wählen eines Deaktivierungscodes.

Aus der DE-A 195 21 853 ist es bekannt, eine derartige Rufumleitung bei Telefonanlagen vorzusehen. Dort wird weiterhin vorgeschlagen, eine automatische Aktivierung und Deaktivierung einer Rufumleitung vorzusehen, so daß in vorgebbaren Zeitintervallen eine Rufumleitung aktiviert ist.

Bei berufstätigen Teilnehmern, die ihre Arbeit nur unregelmäßig im eigenen Büro ausfuhren oder zu unregelmäßige Zeiten morgens in ihrem Büro zum Arbeitsantritt erscheinen, jedoch trotzdem Anrufern einen Ansprechpartner zur Verfügung stellen wollen, z.B. einen Kollegen oder eine Sekretärin, ist eine automatische Rufumleitungsaktivierung nützlich, denn dann wird es vermieden, die Aktivierung der Rufumleitung zu vergessen. Jedoch ist bei solchen Teilnehmern davon auszugehen, daß die Zeitintervalle, während derer eine Rufumleitung aktiviert sein soll, in der Regel variieren und nicht im voraus festlegbar sind. Gerade die Zeitpunkte, zu denen eine Rufumleitungsdeaktivierung erfolgen soll, variieren bei solchen Teilnehmern und sind nicht ohne weiteres vorhersagbar.

Der Erfindung liegt die Aufgabe zugrunde, das Telekommunikationssystem der eingangs genannten Art derart zu modifizieren, daß eine zuverlässige Aktivierung und Deaktivierung einer Rufumleitung auch für Teilnehmer, die eine Rufumleitung in derart variierenden Zeiträumen wünschen, sichergestellt ist.

Die Aufgabe wird dadurch gelöst, daß das erste Teilnehmerendgerät eine Signalisierungsvorrichtung zur Signalisierung einer aktivierten Rufumleitung zum zweiten Teilnehmerendgerät und eine manuell betätigbare Rufumleitungsdeaktivierungsvorrichtung aufweist.

Die Aktivierung einer Rufumleitung erfolgt automatisch und wird vorzugsweise - z.B. bei Arbeitnehmern - an jeden Arbeitstag zu einem derart frühen Zeitpunkt erfolgen, daß bei Abwesenheit des das erste Teilnehmerendgerät benutzenden Teilnehmers ab einer gewünschten vorgebbaren Tageszeit eine Rufumleitung zu einer anderen anwesenden Person aktiviert ist, so daß sichergestellt ist, daß ein das erste Teilnehmerendgerät anrufender anderer Teilnehmer mit einem geeigneten Ansprechpartner verbunden wird Für den Fall, daß der Benutzer des ersten Teilnehmerendgeräts ins Büro kommt, wird ihm die aktivierte Rufumleitung signalisiert und er kann diese durch manuelle Betätigung der Rufumleitungsdeaktivierungsvorrichtung deaktivieren. Er kann aber auch entscheiden, die Rufumleitung weiter aufrechtzuerhalten und gar nicht oder erst zu einem späteren Zeitpunkt zu deaktivieren. Insofern bietet das Telekommunikationssytem eine hohe Flexibilität. Als Vermittlungsstelle kommen insbesondere TK-Anlagen (Telekommunikations-Anlagen, Nebenstellenanlagen) in Betracht. Aber auch in Bezug auf eine Rufumleitung über ein öffentliches Fernsprechnetz ist die Erfindung anwendbar.

In einer Ausgestaltung ist vorgesehen, daß die Signalisierungsvorrichtung zur visuellen Signalisierung einer aktivierten Rufumleitung vorgesehen ist. Eine visuelle Signalisierung, z. B. mit Hilfe einer bei aktivierter Rufumleitung blinkenden und damit nicht zu übersehenden Leuchtdiode, sorgt für eine zuverlässige Informierung des jeweiligen Teilnehmers und ist einfach mit Hilfe üblicher Schaltungen realisierbar.

Die Erfindung betrifft auch ein Teilnehmerendgerät mit einer Rufumleitungsaktivierungsvorrichtung zur automatischen Aktivierung einer Rufumleitung zu einem zweiten Teilnehmerendgerät zu vorgebbaren Zeitpunkten, bei dem das Teilnehmerendgerät eine Signalisierungsvorrichtung zur Signalisierung einer aktivierten Rufumleitung zum zweiten Teilnehmerendgerät und eine manuell betätigbare Rufumleitungsdeaktivierungsvorrichtung aufweist.

Außerdem bezieht sich die Erfindung noch auf ein Verfahren zur Aktivierung und Deaktivierung einer Rufumleitung von einem ersten zu einem zweiten Teilnehmerendgerät, bei dem die Rufumleitung automatisch zu vorgebbaren Zeitpunkten aktiviert wird, eine aktivierte Rufumleitung vom ersten zum zweiten Teilnehmerendgerät mittels einer Signalisierungsvorrichtung des ersten Teilnehmerendgeräts einem Teilnehmer signalisiert wird und eine Deaktivierung der Rufumleitung manuell durch Betätigen einer Rufumleitungsdeaktivierungsvorrichtung des ersten Teilnehmerendgeräts erfolgt.

Ein Ausführungsbeispiel der Erfindung wird im folgenden anhand der Zeichnungen näher erläutert. Es zeigen:
Fig. 1 ein Telekommunikationssystem mit einer Vermittlungsstelle und
Fig. 2 ein Telekommunikationsendgerät des Telekommunikationssystems aus Fig. 1.

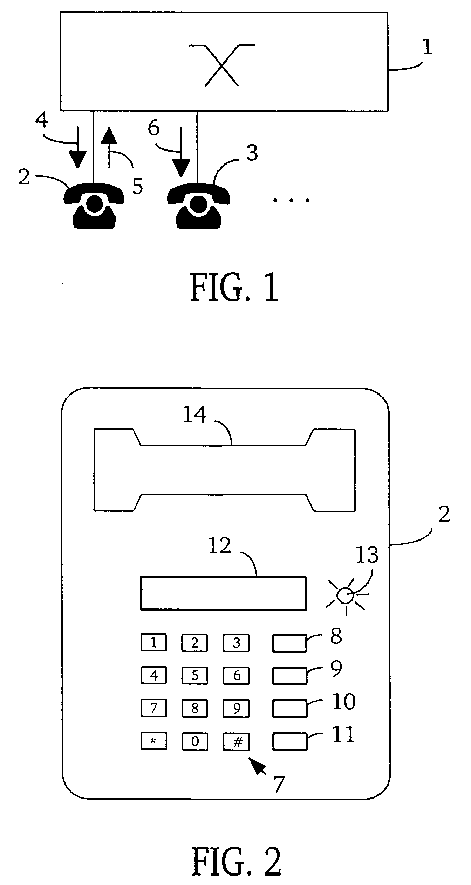

Fig. 1 zeigt ein Telekommunikationssystem mit einer Vermittlungsstelle 1 und zwei mit der Vermittlungsstelle gekoppelten Teilnehmerendgeräten 2 und 3. An die Vermittlungsstelle 1 sind weitere nicht nicht dargestellte Teilnehmerendgeräte angeschlossen, was durch drei Punkte angedeutet ist. Durch drei Pfeile 4, 5 und 6 ist eine aktivierte Rufumleitung vom Teilnehmerendgerät 2 zum Teilnehmerendgerät 3 angedeutet. Die Umleitung eines Rufes kann entweder durch das Teilnehmerendgerät 2 erfolgen. Dies entspricht dem durch die Pfeile angedeuteten Signalfluß. Die Umleitung eines Rufes kann auch in der Vermittlungsstelle 1 selbst erfolgen, was die gängige Realisierung ist. Die Vermittlungsstelle 1 ist vorzugsweise eine ISDN-TK-Anlage. Die Vermittlungsstelle 1 kann aber auch beispielsweise Teil eines öffentlichen Fernsprechnetzes sein.

Fig. 2 zeigt das Teilnehmerendgerät (z.B. ISDN-Telefon) 2 in detaillierterer Darstellung. Dieses weist neben einem üblichen Tastenfeld 7 mit Wähltasten (Tastenanordnung mit 4 Zeilen und 3 Spalten) mehrere Funktionstasten 8 bis 11 auf, die programmierbar sind. Als Anzeige- und Signalisierungsvorrichtungen sind ein LCD-Display 12 und eine Leuchtdiode 13 vorgesehen. Weiterhin ist ein Hörer 14 angedeutet.

Mit Hilfe des Tastenfeldes 7 ist durch Eingabe eines eine Rufumleitungsaktivierung identifizierenden Aktivierungscodes und anschließender Eingabe der Rufnummer des Teilnehmerendgeräts, an das Anrufe weitergeleitet werden sollen (z.B. das Teilnehmerendgerät 3), eine entsprechende Rufumleitung aktivierbar. Weiterhin ist das Teilnehmerendgerät 2 so ausgestaltet, daß ein oder mehrere Zeitpunkte eingebbar sind, zu denen eine solche Rufumleitungsaktivierung automatisch aktiviert wird. Beispielsweise können die Zeitpunkte durch eine bestimmte Tageszeit in Verbindung mit bestimmten Wochentagen festgelegt werden. Eine Rufumleitungsaktivierung wird mit Hilfe einer der dazu in üblicher Weise programmierten Funktionstasten 8 bis 11 durchgeführt, wenn die Zeitpunkte, zu denen jeweils eine automatische Rufumleitungsaktivierung erfolgen soll, und auch das Teilnehmerendgerät, zu dem Rufe umgeleitet werden sollen, fest sind. Eine Aktivierung einer Rufumleitung wird einem Teilnehmer mit Hilfe der Leuchtdiode 13 visuell signalisiert (angezeigt), die dazu in einen blinkenden Zustand versetzt wird. Hierdurch wird ein Übersehen einer derartigen Signalisierung einer aktivierten Rufumleitung vermieden. Weitere Möglichkeiten zur Signalisierung einer aktivierten Rufumleitung sind die visuelle Signalisierung mittels des Displays 12 oder eine akustische Signalisierung mittels eines nicht dargestellten Lautsprechers des Teilnehmerendgeräts 2. Eine Deaktivierung einer Rufumleitung erfolgt durch das Wählen eines Deaktivierungscodes durch entsprechende Eingabe mittels des Tastenfeldes oder durch Betätigen einer der Funktionstasten 8 bis 11, die dazu in üblicher Weise programmiert werden. Die Rufumleitungsdeaktivierung bewirkt eine Beendigung der Rufumleitungsaktivierungssignalisierung (Erlöschen der Leuchtdiode 13).

## Patentansprüche

1. Telekommunikationssystem mit mindestens einer Vermittlungsstelle (1), mehreren Teilnehmerendgeräten (2, 3) und einer Rufumleitungsaktivierungsvorrichtung (7, 8-11) zur automatischen Aktivierung einer Rufumleitung von einem ersten Teilnehmerendgerät (2) zu einem zweiten Teilnehmerendgerät (3) zu vorgebbaren Zeitpunkten,
dadurch gekennzeichnet,
daß das erste Teilnehmerendgerät (2) eine Signalisierungsvorrichtung (13) zur Signalisierung einer aktivierten Rufumleitung zum zweiten Teilnehmerendgerät (3) und eine manuell betätigbare Rufumleitungsdeaktivierungsvorrichtung (7, 8-11) aufweist.

2. Telekommunikationssystem nach Anspruch 1,
dadurch gekennzeichnet,
daß die Signalisierungsvorrichtung (13) zur visuellen Signalisierung einer aktivierten Rufumleitung vorgesehen ist.

3. Telekommunikationssystem nach Anspruch 2,
dadurch gekennzeichnet,
daß eine blinkende Leuchtdiode (13) zur Signalisierung vorgesehen ist.

4. Teilnehmerendgerät (2) mit einer Rufumleitungsaktivierungsvorrichtung (7, 8-11) zur automatischen Aktivierung einer Rufumleitung zu einem zweiten Teilnehmerendgerät (3) zu vorgebbaren Zeitpunkten,
dadurch gekennzeichnet,
daß das Teilnehmerendgerät (2) eine Signalisierungsvorrichtung zur Signalisierung einer aktivierten Rufumleitung zum zweiten Teilnehmerendgerät (3) aufweist und
daß das Teilnehmerendgerät (2) eine manuell betätigbare Rufumleitungsdeaktivierungsvorrichtung (7, 8-11) enthält.

5. Verfahren zur Aktivierung und Deaktivierung einer Rufumleitung von einem ersten (2) zu einem zweiten Teilnehmerendgerät (3), bei dem die Rufumleitung automatisch zu vorgebbaren Zeitpunkten aktiviert wird,
dadurch gekennzeichnet,
daß eine aktivierte Rufumleitung vom ersten (2) zum zweiten Teilnehmerendgerät (3) mittels einer Signalisierungsvorrichtung (13) des ersten Teilnehmerendgeräts (2) einem Teilnehmer signalisiert wird und
daß eine Deaktivierung der Rufumleitung manuell durch Betätigen einer Rufumleitungsdeaktivierungsvorrichtung (7, 8-11) des ersten Teilnehmerendgeräts (2) erfolgt.
